# EUROPEAN PATENT SPECIFICATION

(11) **EP 4 622 349 B1**
(45) Date of publication and mention of the grant of the patent: **11.11.2026**
(21) Application number: 23896225.2
(22) Date of filing: 26.09.2023
(51) Int. Cl.: H04W 80/02, H04B 17/345, H04L 5/00, H04W 16/10, H04W 24/02, H04W 52/02, H04W 72/52

(54) **METHOD FOR REDUCING POWER CONSUMPTION OF WIRELESS NETWORK, AND RELATED APPARATUS**
VERFAHREN ZUR REDUZIERUNG DES STROMVERBRAUCHS EINES DRAHTLOSEN NETZWERKS UND ZUGEHÖRIGE VORRICHTUNG
PROCÉDÉ DE RÉDUCTION DE LA CONSOMMATION D'ÉNERGIE D'UN RÉSEAU SANS FIL, ET APPAREIL ASSOCIÉ

(30) Priority: 30.11.2022 CN 202211530081
(43) Date of publication of application: 24.09.2025
(73) Proprietor: Huawei Technologies Co., Ltd., Shenzhen, Guangdong 518129 (CN)
(72) Inventor: ZHU, Yu, Shenzhen, Guangdong 518129 (CN); LI, Zhengfeng, Shenzhen, Guangdong 518129 (CN)
(74) Representative: Maiwald GmbH
(86) International application number: PCT/CN2023/121402
(87) International publication number: WO 2024/114068

(56) References cited:
- WO-A1-2022/000428
- CN-A- 110 463 060
- CN-A- 111 200 475
- US-A1- 2022 095 309
- US-A1- 2023 189 040
- MODERATOR (INTEL CORPORATION): "Discussion Summary #5 for energy saving techniques of NW energy saving SI", vol. RAN WG1, no. e-Meeting; 20221010 - 20221019, 24 October 2022 (2022-10-24), XP052260207, Retrieved from the Internet <URL:https://ftp.3gpp.org/tsg_ran/WG1_RL1/TSGR1_110b-e/Docs/R1-2210744.zip R1-2210744 FLS_110-NW_Energy_NR-02_final.docx> [retrieved on 20221024]
- PATRICK MERIAS ET AL: "Discussion Summary #4 for energy saving techniques of NW energy saving SI", vol. RAN WG1, no. Toulouse, FR; 20221114 - 20221118, 21 November 2022 (2022-11-21), XP052223324, Retrieved from the Internet <URL:https://www.3gpp.org/ftp/TSG_RAN/WG1_RL1/TSGR1_111/Docs/R1-2212780.zip R1-2212780 FLS_111-NW_Energy_NR-02_v069.docx> [retrieved on 20221121]
- "3rd Generation Partnership Project; Technical Specification Group Radio Access Network; Study on network energy savings for NR (Release 18)", no. V0.3.0, 15 November 2022 (2022-11-15), pages 1 - 21, XP052234382, Retrieved from the Internet <URL:https://ftp.3gpp.org/Specs/archive/38_series/38.864/38864-030.zip 38864-030.docx> [retrieved on 20221115]
- "3rd Generation Partnership Project; Technical Specification Group Radio Access Network; NR; Study on User Equipment (UE) power saving in NR (Release 16)", 3GPP STANDARD; TECHNICAL REPORT; 3GPP TR 38.840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 24 June 2019 (2019-06-24), pages 1 - 74, XP051754330

## Description

This application claims priority to Chinese Patent Application No. CN202211530081.7, filed with the China National Intellectual Property Administration on November 30, 2022 and entitled "METHOD FOR REDUCING ENERGY CONSUMPTION OF WIRELESS NETWORK AND RELATED APPARATUS THEREOF'.

### TECHNICAL FIELD

Embodiments of this application relate to the communication field, and in particular, to a method for reducing energy consumption of a wireless network and a related apparatus thereof.

### BACKGROUND

With evolution of communication technologies and advent of a mobile broadband service era, long term evolution (long term evolution, LTE) has become a mainstream wireless communication standard for carrying a large amount of data and voice services. LTE base stations account for a large proportion of base stations of major operators, but a large number of LTE base stations also account for a large proportion of energy consumption of the operators. Therefore, there is an urgent need to further reduce energy consumption of the LTE base stations. In an LTE network, a plurality of spectra usually cover a same area, causing severe interference between LTE cells.

Currently, a base station supports a cell-specific reference signal (cell-specific reference signal, CRS) dynamic muting algorithm to implement deep symbol power saving. This reduces a quantity of CRS symbols to be sent and achieves energy-saving gains. In addition, currently, coordinated scheduling based power control (coordinated scheduling based power control, CSPC) is used to coordinate transmit power of each cell in time domain. Specifically, at a same time, physical downlink shared channel (physical downlink shared channel, PDSCH) data is sent in a cell while no PDSCH data is sent in a neighboring cell, thereby reducing interference.

Relevant prior art is represented by 3GPP TSG RAN WG1 Meeting #110-bis-e document R1-2210744, wherein the moderator summarizes discussions on remaining issues related to potential solutions for network energy saving SI from RANI #110-bis-e.

However, dynamic muting of a CRS symbol can be performed only in a discontinuous transmission cycle. Energy-saving time is short, and energy-saving effect is not significant. In addition, only interference caused by a PDSCH is reduced through the CSPC, and no other interference is reduced. Therefore, gains are limited, affecting network experience, and energy-saving gains are not significant.

### SUMMARY

This application provides a method for reducing energy consumption of a wireless network and a related apparatus thereof, applied to network communication in the Internet industry. Interference from an intra-frequency neighboring cell and CRS interference can be reduced, experience of edge users is improved, energy-saving duration and an energy-saving depth can be increased, and gains are significant. Therefore, energy consumption of the entire wireless network is reduced and energy-saving gains and network experience are improved.

According to a first aspect, a method for reducing energy consumption of a wireless network is provided, including:
A first base station receives a first request, where the first request is sent by a second base station based on a measurement report. A first cell to which the first base station belongs is an intra-frequency neighboring cell of a second cell to which the second base station belongs, the measurement report is used to obtain information about interference from the first cell to the second cell, and the information about interference indicates a degree of the interference from the first cell to the second cell.

Then, the first base station sends first load information to the second base station based on the first request, where the first load information indicates a load degree of the first cell.

Then, the first base station receives a second request, where the second request is sent by the second base station based on the information about interference and the first load information.

Then, the first base station switches the first cell to a carrier aggregation (carrier aggregation, CA) secondary cell based on the second request and the first load information.

In addition, when no CA secondary cell user is activated in the first cell, the first base station sends, in a target resource block, cell-specific reference signal CRS symbols at locations of a maximum of three columns, where the target resource block belongs to a system bandwidth of the first base station, and a quantity of target resource blocks is less than a total quantity of resource blocks of the system bandwidth corresponding to the first base station.

In an implementation of this application, the second base station obtains information about interference from an intra-frequency neighboring cell to the second cell from a user terminal, determines that the first cell is a cell with strongest interference, obtains load information of the first cell from the first base station, and switches the first cell to the CA secondary cell. In addition, when no CA secondary cell user is activated in the first cell, after performing time-domain muting and frequency-domain muting on the first cell, the first base station sends, in the target resource block, the CRS symbols at the locations of a maximum of three columns. In this way, co-channel interference and CRS interference are further reduced, thereby improving experience of an edge user, and energy-saving duration and an energy-saving depth of the cell are increased, thereby reducing energy consumption of the entire wireless network and improving energy-saving gains and network experience.

In a possible implementation of the first aspect, the first base station switches the first cell to the secondary cell based on the second request, the first load information, a third cell, and second load information, where the third cell is an inter-frequency co-coverage neighboring cell of the first cell, and the second load information indicates a load degree of the third cell.

In an implementation of this application, the first base station switches the first cell to the CA secondary cell based on the second request, the first load information, the third cell, and the second load information. This increases application scenarios, and improves applicability of the solution.

In a possible implementation of the first aspect, the first base station determines the third cell based on an inter-frequency neighbor relationship and a co-coverage identifier, where the inter-frequency neighbor relationship indicates an inter-frequency neighboring cell of the first cell, and the co-coverage identifier indicates a cell whose coverage has an intersection with that of the third cell.

Alternatively, the first base station determines the third cell through inter-frequency measurement.

In addition, the first base station receives the second load information sent by a third base station, where the third base station belongs to the third cell.

In an implementation of this application, the inter-frequency co-coverage neighboring cell of the first cell, namely the third cell, is determined in a plurality of manners. This increases application scenarios and selectivity of the solution.

In a possible implementation of the first aspect, the first base station sends a target message, where the target message is used to notify that the first cell is currently the CA secondary cell.

In an implementation of this application, the first base station sends the target message, for the avoidance of user switch to the first cell. When a user needs to be switched to another cell, the first cell is ignored, to avoid a switch failure.

In a possible implementation of the first aspect, after switching the first cell to the CA secondary cell, the first base station forbids sending of a system message and paging.

In an implementation of this application, after switching the first cell to the CA secondary cell, the first base station forbids the sending of the system message and paging. This can reduce operating energy consumption and increase energy-saving gains.

According to a second aspect, a method for reducing energy consumption of a wireless network is provided, including:
A second base station receives a measurement report sent by a user terminal, where the measurement report is used to obtain information about interference from a first cell to a second cell. The second cell is a cell corresponding to the second base station, the first cell is a cell corresponding to the first base station, the first cell is an intra-frequency neighboring cell of the second cell, and the user terminal is connected to the second base station.

Then, the second base station sends a first request to the first base station based on the measurement report, where the first request indicates the first base station to determine first load information, and the first load information indicates a load degree of the first cell.

Then, the second base station receives the first load information sent by the first base station.

In addition, the second base station sends a second request to the first base station based on the information about interference and the first load information, where the second request indicates the first base station to switch the second cell to a CA secondary cell.

In an implementation of this application, the second base station sends the second request to the first base station based on the information about interference and the first load information, so that after switching the first cell to the CA secondary cell based on the second request and the first load information, the first base station may implement time-domain muting and frequency-domain muting of a deep symbol based on a state of a CA secondary cell user. In this way, co-channel interference and CRS interference between cells are reduced, thereby improving experience of an edge user, and energy-saving duration and an energy-saving depth of the cell are increased, thereby reducing energy consumption of the entire wireless network and improving energy-saving gains and network experience.

In a possible implementation of the second aspect, the second base station receives a target message sent by the first base station, where the target message is used to notify that the first cell is currently the CA secondary cell.

In an implementation of this application, the second base station receives the target message, for the avoidance of user switch to the first cell. When a user needs to be switched to another cell, the first cell is ignored, to avoid a switch failure.

According to a third aspect, a base station is provided. The base station has a function of implementing the method in any one of the first aspect or the possible implementations of the first aspect. The function may be implemented by hardware, or may be implemented by hardware executing corresponding software. The hardware or the software includes one or more modules corresponding to the function.

In an implementation of this application, the base station according to the third aspect performs the method described in any one of the first aspect or the possible implementations of the first aspect of this application.

According to a fourth aspect, a base station is further provided. The base station has a function of implementing the method in any one of the second aspect or the possible implementations of the second aspect. The function may be implemented by hardware, or may be implemented by hardware executing corresponding software. The hardware or the software includes one or more modules corresponding to the function.

In an implementation of this application, the base station according to the fourth aspect performs the method described in any one of the second aspect or the possible implementations of the second aspect of this application.

According to a fifth aspect, a communication apparatus is provided, which may include a processor. The processor is coupled to a memory. The memory is configured to store instructions. The processor is configured to execute the instructions in the memory, so that the communication apparatus performs the method described in any one of the first aspect or the possible implementations of the first aspect of this application, or performs the method described in any one of the second aspect or the possible implementations of the second aspect of this application.

According to a sixth aspect, another communication apparatus is provided, which includes a processor configured to execute a computer program (or computer-executable instructions) stored in a memory. When the computer program (or the computer-executable instructions) is executed, the method in the first aspect and the possible implementations of the first aspect is performed, or the method described in any one of the second aspect or the possible implementations of the second aspect of this application is performed.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to a seventh aspect, a computer-readable storage medium is provided, which includes computer-readable instructions. When the computer-readable instructions are run on a computer, the method described in any one of the first aspect, the possible implementations of the first aspect, the second aspect, or the possible implementations of the second aspect of this application is performed.

According to an eighth aspect, a computer program product is provided, which includes computer-readable instructions. When the computer-readable instructions are run on a computer, the method described in any one of the first aspect, the possible implementations of the first aspect, the second aspect, or the possible implementations of the second aspect of this application is performed.

### BRIEF DESCRIPTION OF DRAWINGS

FIG. 1a is a diagram of completely sending a CRS symbol in a subframe;
FIG. 1b is a diagram of sending a CRS symbol in a subframe that meets a CRS time-domain muting decision condition;
FIG. 2 is a diagram of a method for reducing energy consumption of a wireless network according to an embodiment of this application;
FIG. 3 is a diagram of an architecture of a base station according to an embodiment of this application;
FIG. 4 is a schematic flowchart of A3 measurement according to an embodiment of this application;
FIG. 5 is a schematic flowchart of SRS measurement according to an embodiment of this application;
FIG. 6 is a diagram of transferring load information of a cell between intra-frequency cells according to an embodiment of this application;
FIG. 7 is a diagram of transmitting a CA secondary cell switch request according to an embodiment of this application;
FIG. 8 is a schematic flowchart of CA secondary cell switch according to an embodiment of this application;
FIG. 9 is a diagram of non-muting of a CRS in a subframe according to an embodiment of this application;
FIG. 10 is a diagram of time-domain muting of a CRS symbol according to an embodiment of this application;
FIG. 11 is a diagram of frequency-domain muting of a CRS symbol according to an embodiment of this application;
FIG. 12 is a diagram of frequency-domain muting and time-domain muting of a CRS symbol according to an embodiment of this application;
FIG. 13 is a diagram of sending a target message according to an embodiment of this application;
FIG. 14 is a diagram of an application scenario of multi-frequency networking according to an embodiment of this application;
FIG. 15 is a diagram of a structure of a base station according to an embodiment of this application;
FIG. 16 is a diagram of another structure of a base station according to an embodiment of this application; and
FIG. 17 is a diagram of a structure of a communication apparatus according to an embodiment of this application.

### DESCRIPTION OF EMBODIMENTS

Embodiments of this application provide a method for reducing energy consumption of a base station and a related apparatus thereof, which are applied to network communication in the Internet industry. A degree of interference between cells is reduced, experience of edge user is improved, and energy-saving duration and an energy-saving depth of the cell are increased. Therefore, energy consumption of the entire wireless network is reduced and energy-saving gains and network experience are improved.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

For ease of understanding of embodiments of this application, the following first briefly describes a current solution in which power is coordinated through a CRS dynamic muting algorithm and CSPC to reduce interference.

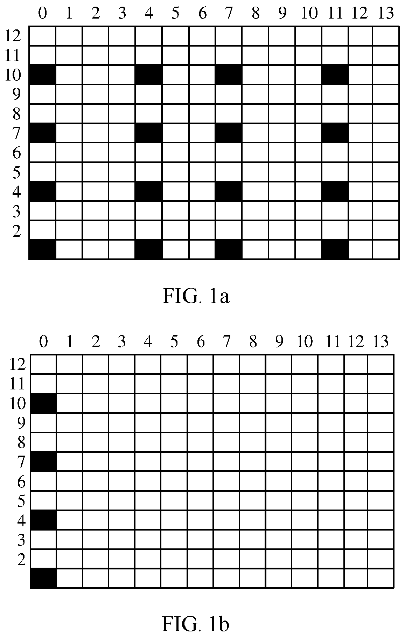

Currently, a base station supports a CRS dynamic muting algorithm in which CRSs in all downlink subframes do not need to be completely sent, mainly based on CRS measurement behavior of a user terminal (the user terminal connected to the base station in a cell enables discontinuous transmission). When the CRSs are completely sent, four CRS symbols are sent in each subframe. Corresponding to a subframe that meets a CRS time-domain muting decision condition, some of CRS symbols at a location 4, a location 7, and/or a location 11 in the subframe shown in an example in FIG. 1a are muted. In a dormant cycle in which all user terminals perform discontinuous transmission, one CRS is sent in each subframe, for example, the CRS symbol at a location 0 shown in an example in FIG. 1b. FIG. 1a is a diagram of completely sending a CRS symbol in a subframe. FIG. 1b is a diagram of sending a CRS symbol in a subframe that meets a CRS time-domain muting decision condition.

Although only one CRS symbol can be sent in the subframe that meets the CRS time-domain muting decision condition, the transmission can be performed only in a discontinuous transmission cycle. Therefore, energy-saving time is short, and energy-saving effect is not significant.

CSPC is a feature of coordinating transmit power of each cell in time domain. For neighboring cell 1 and cell 2, transmit power of PDSCH data on a resource element is coordinated in a basic time unit (transmission time interval, TTI) of each dynamic scheduling resource based on a scheduling requirement of each cell. Specifically, at a same time, PDSCH data is sent in a cell, while no PDSCH data is sent in a neighboring cell, thereby avoiding interference caused by a PDSCH between neighboring cells and reducing interference.

However, in an LTE network, CRSs account for a large proportion, and the CRSs along with user-level PDSCH and physical downlink control channel (physical downlink control channel, PDCCH) are main causes of interference. Adoption of the CSPC feature only reduces interference caused by power of the PDSCH, resulting in limited gains. Other interference still exists, affecting network experience. To resolve the foregoing problem, embodiments of this application first provide a method for reducing energy consumption of a wireless network and a related apparatus thereof, which are applied to the field of Internet communication. A second base station receives a measurement report sent by a user terminal, where the measurement report is used to obtain information about interference from a first cell to a second cell; and then, a first base station receives a first request sent by the second base station based on the measurement report. The first cell to which the first base station belongs is an intra-frequency neighboring cell to which the second base station belongs. In addition, the first base station sends first load information to the second base station based on the first request, where the first load information indicates a load degree of the first cell. Then, the first base station receives a sent second request, where the second request is sent by the second base station based on the information about interference and the first load information, where the information about interference indicates a degree of the interference from the first cell to the second cell. Then, the first base station switches the first cell to a CA secondary cell based on the second request and the first load information. In addition, when no CA secondary cell user is activated in the first cell, the first base station sends, in a target resource block, a CRS symbol at a location 0 in a subframe, where the target resource block is a specific resource block of a system bandwidth of the first base station, and a quantity of target resource blocks is less than a total quantity of resource blocks of the system bandwidth corresponding to the first base station. The first cell that causes strong interference to the second cell is switched to the CA secondary cell. In this way, a degree of interference between cells can be reduced, thereby improving experience of an edge user, the CRS is muted in both time domain and frequency domain, and energy-saving duration and an energy-saving depth of the cell are increased while the interference is reduced, thereby reducing energy consumption of the entire wireless network.

For better understanding of embodiments of this application, the following first describes in detail, with reference to the accompanying drawings, a method for reducing energy consumption of a wireless network provided in embodiments of this application. A person of ordinary skill in the art may learn that, with the development of technologies and emergence of a new scenario, the technical solutions provided in embodiments of this application are also applicable to a similar technical problem.

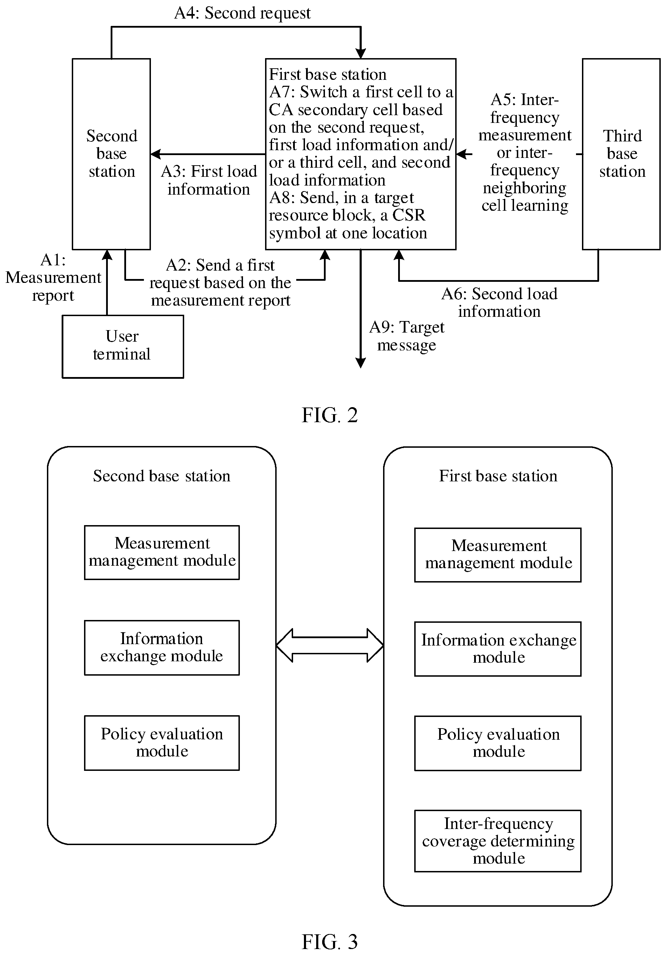

For ease of understanding, the following describes a method for reducing energy consumption of a wireless network provided in an embodiment of this application. For details, refer to FIG. 2. FIG. 2 is a diagram of a method for reducing energy consumption of a wireless network according to an embodiment of this application. The method specifically includes the following steps.

A1: A user terminal sends a measurement report to a second base station.

The second base station receives the measurement report sent by the user terminal, where the measurement report is used to obtain information about interference from a first cell to a second cell, the second cell is a cell corresponding to the second base station, the first cell is a cell corresponding to a first base station, the first cell is an intra-frequency neighboring cell of the second cell, and the user terminal is connected to the second base station in the second cell.

For example, the second base station may obtain, based on measurement reports such as A3 and a sounding reference signal (sounding reference signal, SRS) sent by a user terminal in the second cell, a degree of interference from the user terminal in the second cell to an intra-frequency neighboring cell. Specifically, the following provides description based on an example of an architecture of the second base station. For details, refer to FIG. 3. FIG. 3 is a diagram of an architecture of a base station according to an embodiment of this application. The second base station includes a measurement management module, an information exchange module, and a policy evaluation module. In addition, the first base station may further include an inter-frequency coverage determining module, configured to determine an inter-frequency co-coverage neighboring cell.

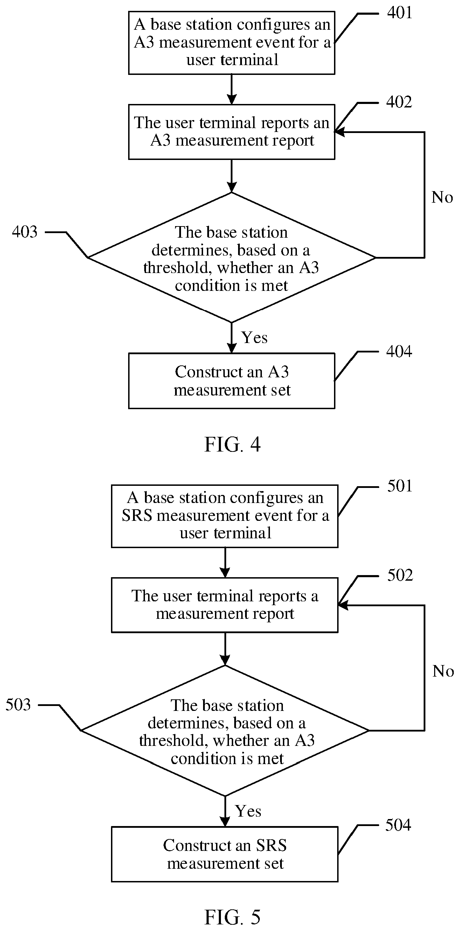

The measurement management module may perform step A1. For example, in a possible implementation, a measurement report is obtained through A3 measurement. Specific implementation is shown in an example in FIG. 4. FIG. 4 is a schematic flowchart of A3 measurement according to an embodiment of this application. Details are as follows.

Step 401: A measurement association module of a base station configures an A3 measurement event for a user terminal.

Step 402: The user terminal reports a measurement report after an A3 condition is met, that is, the user terminal sends the measurement report to the second base station.

Step 403: The base station determines, based on a threshold, whether a received A3 measurement report meets the A3 condition. If the received A3 measurement report does not meet the A3 condition, step 402 continues to be performed. If the received A3 measurement report meets the A3 condition, the following step 404 is performed.

Step 404: The base station constructs an A3 measurement set. Specifically, the measurement management module periodically sorts quantities of received A3 measurement reports of intra-frequency neighboring cells of the second cell, and maintains an interfering neighboring cell set, namely information about interference. A larger quantity of received A3 measurement reports of an intra-frequency neighboring cell indicates stronger interference.

Alternatively, in another possible implementation, a measurement report is obtained through SRS measurement, to evaluate interference. Specific implementation is shown in an example in FIG. 5. FIG. 5 is a schematic flowchart of SRS measurement according to an embodiment of this application. Details are as follows.

Step 501: A measurement association module of a base station configures an SRS measurement event for a user terminal.

Step 502: The user terminal reports a measurement report, that is, the user terminal sends the measurement report to the second base station.

Step 503: The base station determines, based on a threshold, whether a received measurement report meets an A3 condition. If the received A3 measurement report does not meet the A3 condition, step 502 continues to be performed. If the received A3 measurement report meets the A3 condition, the following step 504 is performed.

Step 504: The base station constructs an SRS measurement set. Specifically, the measurement management module periodically sorts quantities of received measurement reports of intra-frequency neighboring cells of the second cell, and maintains an interfering neighboring cell set, namely information about interference. A larger quantity of received measurement reports of an intra-frequency neighboring cell indicates stronger interference.

In an implementation of this application, interference is evaluated through the A3 measurement or the SRS measurement, to obtain a measurement report. This reflects diversity and selectivity of the solution.

A2: The second base station sends a first request to the first base station based on the measurement report.

The second base station sends the first request to the first base station based on the received measurement report, where the first request indicates the first base station to determine first load information, and the first load information indicates a load degree of the first cell.

In addition, after receiving the first request, the first base station determines a load status of the first cell to obtain the first load information, and then the following step A3 is performed. Details are as follows.

A3: The first base station sends the first load information to the second base station.

The first base station sends the first load information to the second base station based on the first request. In this way, the first base station is notified of a load status of the second base station.

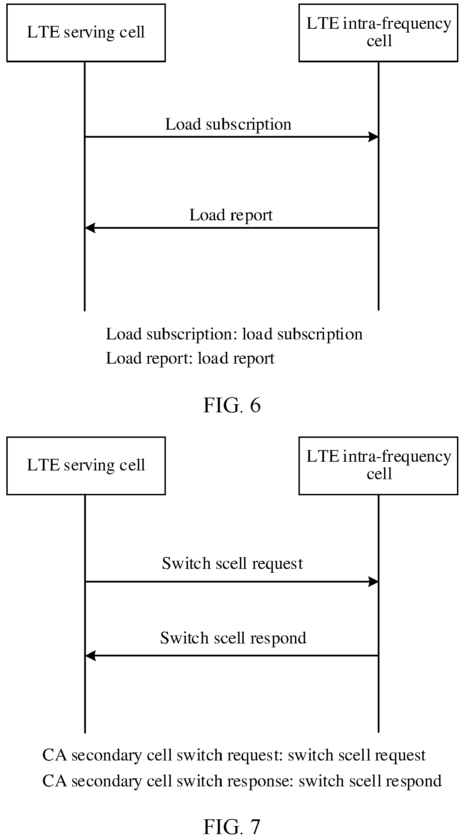

For an example of sending the first load information, refer to an example in FIG. 6. FIG. 6 is a diagram of transferring load information of a cell between intra-frequency cells according to an embodiment of this application. An LTE serving cell, namely the second cell, sends a load subscription (load subscription) request, namely the first request, to an LTE intra-frequency cell, namely the first cell, and then the LTE intra-frequency cell sends a load report (load report), namely the first load information, to the LTE serving cell.

It should be noted that FIG. 6 is merely used as an example for understanding of obtaining load information of an intra-frequency cell, and does not constitute any substantive limitation on this solution. Specifically, the request may be another request, which is not specifically limited herein.

After the first base station obtains the first load information, the following step A4 is performed.

A4: The second base station sends a second request to the first base station.

The second base station sends the second request to the first base station based on the information about interference and the first load information, where the second request indicates the first base station to switch the second cell to a CA secondary cell.

For example, refer to an example in FIG. 7. FIG. 7 is a diagram of transmitting a CA secondary cell switch request according to an embodiment of this application. The LTE serving cell, namely the second cell, sends a CA secondary cell switch request (switch scell request) to the LTE intra-frequency cell, namely the first cell, and the LTE serving cell receives a CA secondary cell switch response (switch scell respond) message sent by the LTE intra-frequency cell. It should be noted that an example in FIG. 7 is merely used for description. In an actual case, the second request may alternatively be transmitted to the intra-frequency cell, namely the first base station, in another form. This is not specifically limited herein.

In a possible implementation, after the first base station receives the second request, the following step A7 is performed, to switch the first cell to a CA secondary cell. Details are as follows.

A7: The first base station switches the first cell to a CA secondary cell based on the second request, the first load information and/or a third cell, and second load information.

In a possible implementation, the first base station switches the first cell to the CA secondary cell based on the second request and the first load information.

For example, the first base station receives the second request and the first load information sent by the second base station, and if the first load information meets a threshold, switches the first cell to the CA secondary cell. Specifically, the first base station forbids access of a new user, and transfers, through an inter-base station X2 interface, an identifier indicating that user switch is forbidden, to forbid a user in a neighboring cell to be switched to the first cell. In addition, a user in the first cell is switched to another cell. If user migration is successful, the first cell is switched to a CA secondary carrier state, namely the CA secondary cell. If user migration is not successful, switch is stopped.

In an implementation of this application, the first cell needs to be switched to the CA secondary cell only based on the second request and the load information of the first cell. This is applicable to most application scenarios, and therefore applicability of the solution is improved.

In a possible implementation, the first base station switches the first cell to the CA secondary cell based on the second request, the first load information, the third cell, and the second load information, where the third cell is an inter-frequency co-coverage neighboring cell of the first cell, and the second load information indicates a load degree of the third cell.

Before switch, the first base station determines the third cell based on an inter-frequency neighbor relationship and a co-coverage identifier, and receives the second load information sent by a third base station, where the third base station belongs to the third cell, the inter-frequency neighbor relationship indicates an inter-frequency neighboring cell of the first cell, and the co-coverage identifier indicates a cell whose coverage has an intersection with that of the third cell. Corresponding to step A5 and step A6 in FIG. 2, that is, after step A4 and before step A7, step A5 and step A6 are further included. Details are as follows.

A5: The first base station determines the third cell through an inter-frequency policy or inter-frequency neighboring cell learning.

The first base station determines the third cell through inter-frequency measurement or inter-frequency neighboring cell learning.

For example, the inter-frequency coverage determining module in an example in FIG. 3 may be configured to perform step A5. In a possible implementation, an inter-frequency neighbor relationship and co-coverage identifiers of the first cell and a base cell are configured, to determine whether an inter-frequency neighboring cell exists and whether the inter-frequency neighboring cell is in a co-coverage relationship, and an inter-frequency neighboring cell that carries a co-coverage identifier is determined as an inter-frequency co-coverage neighboring cell. For example, if it is determined, based on an inter-frequency neighbor relationship, that the third cell is an inter-frequency neighboring cell of the first cell, and the third cell carries a same co-coverage identifier as that of the first cell, the third cell is determined as an inter-frequency co-coverage neighboring cell. The inter-frequency neighbor relationship may be determined during network deployment, or carried by the first base station. In addition, the co-coverage identifier may be a letter, a digit, a character, a Chinese character, a cell identifier, or the like, and may be determined based on an actual situation. This is not specifically limited herein.

In another possible implementation, for example, the inter-frequency coverage determining module learns an inter-frequency co-coverage neighboring cell through an inter-frequency neighboring cell. After a feature is enabled, co-coverage neighboring cell learning for inter-frequency measurement is started for the first cell. An inter-frequency neighboring cell learning structure is used to determine whether an inter-frequency co-coverage neighboring cell exists, and determine that the learned third cell is an inter-frequency co-coverage neighboring cell.

In an implementation of this application, the inter-frequency co-coverage neighboring cell of the first cell, namely the third cell, is determined in a plurality of manners. This increases application scenarios and selectivity of the solution.

A6: The third base station sends the second load information to the first base station.

The third base station sends the second load information to the first base station, where the third base station belongs to the third cell, that is, the second load information indicates the load degree of the third cell.

Details are similar to that of obtaining the first load information in the foregoing step A3, and are not described herein again.

Then, the first base station performs step A7. Specifically, the second base station switches the first cell to the CA secondary cell based on the second request, the first load information, the third cell, and the second load information.

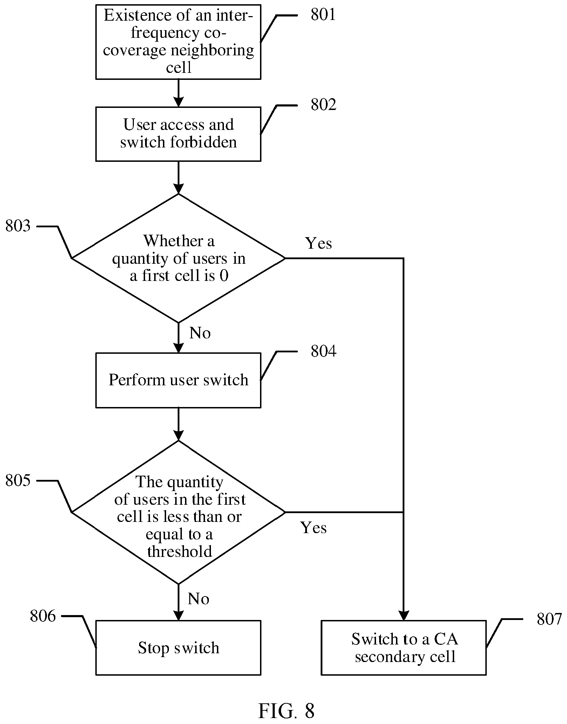

For example, if the first base station determines that the second request sent by the second base station has been received and the first load information meets a threshold, and determines that the inter-frequency co-coverage neighboring cell of the first cell, namely the third cell, exists and the second load information meets a threshold, the first base station switches the first cell to the CA secondary cell. For details, refer to an example in FIG. 8. FIG. 8 is a schematic flowchart of CA secondary cell switch according to an embodiment of this application, including the following steps.

Step 801: The first base station determines existence of the inter-frequency co-coverage neighboring cell, namely the third cell.

Step 802: The first base station forbids access and switch of a new user. Specifically, a new user is forbidden to access the first cell, and an identifier indicating that user switch is forbidden is transferred through an inter-base station X2 interface, to forbid a user in a neighboring cell to be switched to the first cell.

Step 803: Determine whether a quantity of users in the first cell is 0. When the quantity of users is 0, step 807 is performed to switch the first cell to the CA secondary cell. If there is still a user in the first cell, step 806 is performed.

Step 804: Perform user switch, that is, switch a user in the first cell to another cell.

Step 805: The quantity of users in the first cell is less than or equal to a threshold. Specifically, when user migration is successful and the quantity of users is less than or equal to a set threshold, step 807 is performed, that is, the first cell is switched to the CA secondary carrier state, namely the CA secondary cell; or if user migration is not successful and a quantity of remaining users is greater than a threshold, step 806 is performed to stop switch.

Step 806: Stop switching the first cell to the CA secondary cell.

Step 807: Switch the first cell to the CA secondary carrier state, namely the CA secondary cell.

In an implementation of this application, the first base station switches the first cell to the CA secondary cell based on the second request, the first load information, the third cell, and the second load information. This increases application scenarios, and improves applicability of the solution.

Then, the first base station performs step A8. Details are as follows.

A8: The first base station sends, in a target resource block, a CRS symbol at one location.

When no CA secondary cell user is activated in the first cell, the first base station sends, in the target resource block, CRS symbols at locations of a maximum of three columns, where the target resource block belongs to a system bandwidth of the first base station, and a quantity of target resource blocks is less than a total quantity of resource blocks of the system bandwidth corresponding to the first base station.

For example, for ease of understanding, the following may first describe states of a CA user after the first cell is switched to the CA secondary cell. The states of the CA user are as follows.

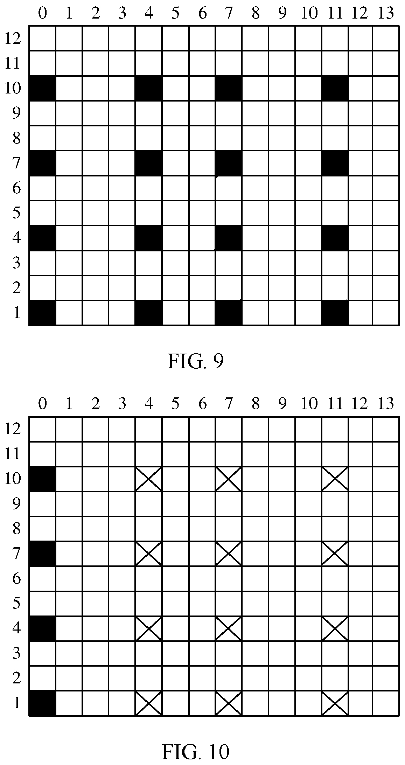

State 1: time-domain non-muting and frequency-domain non-muting. That is, a deep symbol in a subframe is not muted, and the subframe is normally transmitted. For a specific example, refer to FIG. 9. FIG. 9 is a diagram of non-muting of a CRS in a subframe according to an embodiment of this application.

State 2: time-domain muting. For a subframe that meets a feature validation decision condition, some of CRS symbols in a column 4, a column 7, and/or a column 11 in the subframe may be muted by using a time-domain muting technology. A specific example is shown in FIG. 10. FIG. 10 is a diagram of time-domain muting of a CRS symbol according to an embodiment of this application.

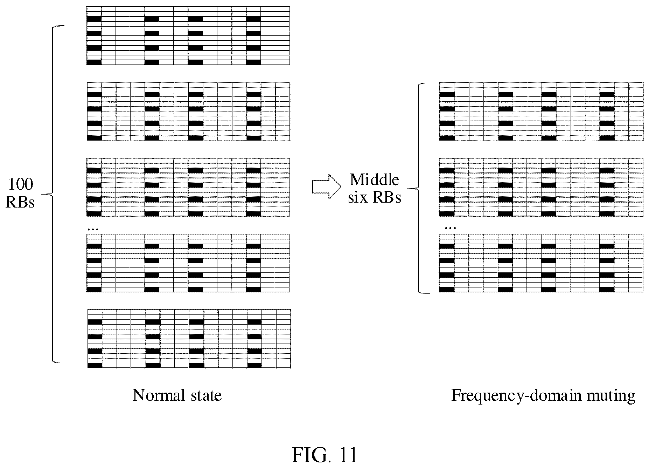

State 3: frequency-domain muting. For example, a 20 MHz LTE cell is used as an example. For a subframe that meets a feature validation decision condition, CRS symbols may be sent only in six resource blocks in the middle of the system bandwidth by using a frequency-domain muting technology, and are not sent in all other resource blocks, thereby reducing interference from a CRS to a neighboring cell. A specific example is shown in FIG. 11. FIG. 11 is a diagram of frequency-domain muting of a CRS symbol according to an embodiment of this application. In a normal state, CRS symbols are normally sent in all 100 resource blocks. After frequency-domain muting is performed, CRS symbols are sent only in six resource blocks in the middle of the system bandwidth.

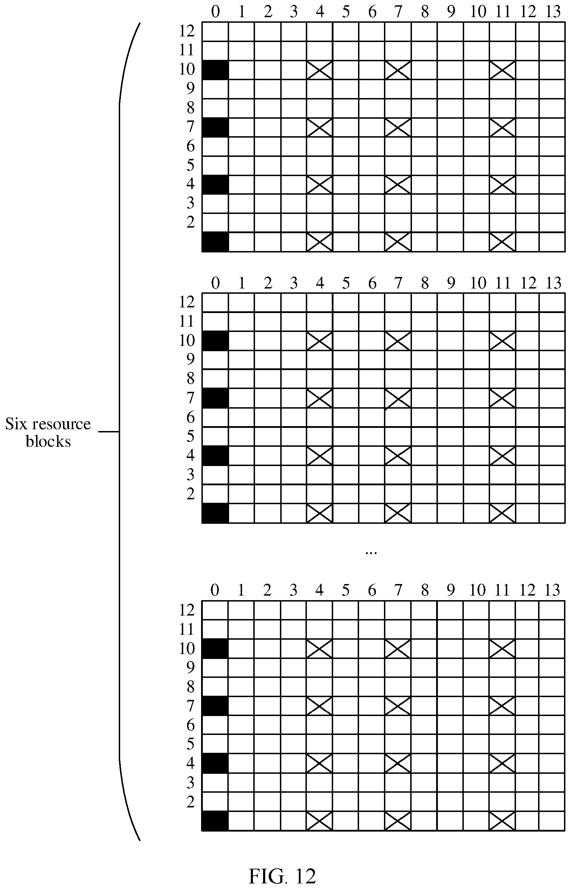

State 4: time-domain muting and frequency-domain muting. In this case, CRS symbols are sent only in a specific quantity of resource blocks, and some of CRS symbols in a column 4, a column 7, and/or a column 11 in a subframe that meets a feature validation decision condition are muted, thereby further reducing interference. For details, refer to FIG. 12. FIG. 12 is a diagram of time-domain muting and frequency-domain muting of a CRS symbol according to an embodiment of this application. A 20 MHz LTE cell is still used as an example. CRS symbols at locations of a column 4, a column 7, and/or a column 11 may be muted by performing time-domain muting, and frequency-domain muting is performed, that is, CRS symbols at locations of a column 0, CRS symbols at locations of a column 0 and a column 4, CRS symbols at locations of a column 0 and a column 7, or CRS symbols at locations of a column 0 and a column 11 are sent in six resource blocks in the middle of the system bandwidth. It may be understood that a quantity of sent CRS symbols is less than a total quantity of resource blocks in the system bandwidth of the first base station, and a specific quantity may be determined based on an actual situation. In addition, in the time-domain muting, at least one column of CRS symbols need to be muted. This is not specifically limited herein.

Therefore, when no CA secondary cell user is activated in the first cell, the first base station sends, in the target resource block, CRS symbols at locations of a maximum of three columns, as shown in the example in FIG. 12. This can greatly reduce CRS interference and increase energy-saving gains.

In a possible implementation, the first base station further performs step A9. Details are as follows.

A9: The first base station sends a target message.

The first base station sends a target message, where the target message is used to notify that the first cell is currently the CA secondary cell. Specifically, the first base station sends the target message to all neighboring cells, for the avoidance of user switch to the first cell.

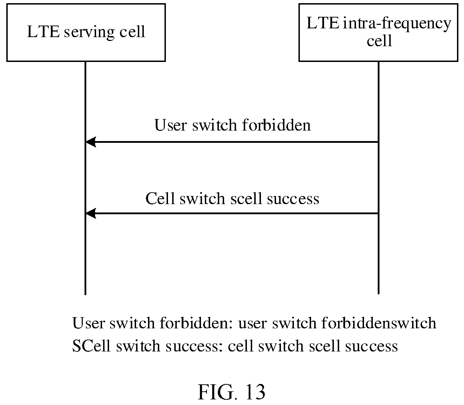

For example, refer to an example in FIG. 13. FIG. 13 is a diagram of sending a target message according to an embodiment of this application. The LTE intra-frequency cell, namely the first cell, sends a user switch forbidden (user switch forbidden) message to the LTE serving cell, namely the second cell (corresponding to step 802 of forbidding the user terminal to be switched to the first cell in FIG. 8). After receiving the message, the LTE serving cell no longer switches a user to the LTE intra-frequency cell, and perceives that the LTE intra-frequency cell is currently the CA secondary cell. In addition, after the LTE intra-frequency cell is switched to the CA secondary cell, the LTE intra-frequency cell further sends a SCell switch success (cell switch scell success) message to the LTE serving cell, to notify the LTE serving cell that the LTE intra-frequency cell is currently the CA secondary cell. It should be noted that the example in FIG. 13 is merely used for description, and does not constitute any substantive limitation on this solution.

It should be noted that a sequence of step A9 and step A8 is not limited.

In an implementation of this application, the first base station sends the target message, for the avoidance of user switch to the first cell. When a user needs to be switched to another cell, the first cell is ignored, to avoid a switch failure.

In a possible implementation, after switching the first cell to the CA secondary cell, the first base station forbids sending of a system message and paging. This can reduce operating energy consumption and increase energy-saving gains.

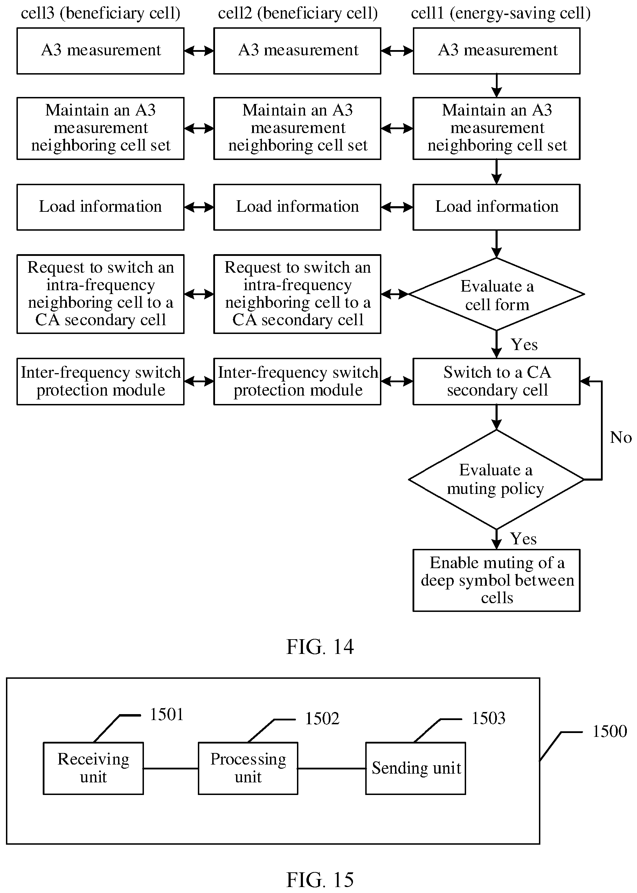

For example, for better understanding of embodiments of this application, the following provides an application scenario of multi-frequency networking as an example for description. For details, refer to an example in FIG. 14. FIG. 14 is a diagram of an application scenario of multi-frequency networking according to an embodiment of this application. A measurement management module in a base station first performs A3 measurement on a beneficiary cell cell3, a beneficiary cell cell2, and an energy-saving cell cell1, and maintains an A3 measurement neighboring cell set. Then, an information exchange module of a base station corresponding to each cell transfers load information of a neighboring cell with strong interference. Then, a policy evaluation module of the energy-saving cell evaluates a cell form, and another beneficiary cell sends to the energy-saving cell a request for switching the energy-saving cell to a CA secondary cell. Optionally, an inter-frequency coverage determining module of the energy-saving cell determines that an inter-frequency co-coverage neighboring cell exists, and obtains load information of the inter-frequency co-coverage neighboring cell, and the energy-saving cell is switched to the CA secondary cell on this basis. Then, a muting policy is evaluated. After the energy-saving cell is switched to the CA secondary cell, if no CA user is activated, time-domain muting and frequency-domain muting of a deep symbol of the energy-saving cell are enabled. In this way, co-channel interference and CRS interference can be reduced as much as possible, thereby improving experience of an edge user, and energy-saving duration and an energy-saving depth of the cell can be increased, thereby reducing energy consumption of the entire wireless network and improving energy-saving gains and network experience.

In embodiments of this application, the second base station obtains the information about interference from the intra-frequency neighboring cell to the second cell from the user terminal, determines that the first cell is a cell with strongest interference, obtains load information of the first cell from the first base station, and switches the first cell to the CA secondary cell. In addition, when no CA secondary cell user is activated in the first cell, after performing the time-domain muting and the frequency-domain muting on the first cell, the first base station sends, in the target resource block, the CRS symbols at the locations of a maximum of three columns. In this way, the co-channel interference and the CRS interference are further reduced, thereby improving experience of the edge user, and the energy-saving duration and energy-saving depth of the cell are increased, thereby reducing the energy consumption of the entire wireless network and improving the energy-saving gains and the network experience.

It should be noted that FIG. 2 and FIG. 14 are merely used as examples for understanding of embodiments of this application, and do not constitute a substantive limitation on this application. It may be understood that an actual application scenario may alternatively be in another form. This is not specifically limited herein.

A method for reducing energy consumption of a wireless network provided in embodiments of this application is described in detail above. Specific examples are used in this specification to describe principles and implementations of this application. Descriptions of the foregoing embodiments are merely used to help understand the method and core ideas of this application. In addition, a person of ordinary skill in the art may make modifications in terms of the specific implementations and application scopes based on the ideas of this application. In conclusion, the content of this specification shall not be construed as a limitation on this application.

To implement functions in the method provided in embodiments of this application, the base station may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 15, an embodiment of this application further provides a base station. The base station is used in the Internet industry. Specifically, refer to FIG. 15. FIG. 15 is a diagram of a structure of a base station according to an embodiment of this application. In a possible implementation, the base station may include modules or units that perform and that is in one-to-one correspondence with the method/operations/steps/actions corresponding to the first base station in FIG. 2 in the foregoing method embodiment. The units may be hardware circuits, software, or may be implemented by a hardware circuit in combination with software. In a possible implementation, the base station 1500 may include a receiving unit 1501, a processing unit 1502, and a sending unit 1503. The receiving unit 1501 may be configured to perform the step of receiving a first request and the step of receiving a second request in the foregoing method embodiment. The processing unit 1502 may be configured to perform the step of switching a first cell to a CA secondary cell based on the second request and first load information in the foregoing method embodiment. The sending unit 1503 may be configured to perform the step of sending the first load information to a second base station in the foregoing method embodiment and the step of sending, in a target resource block, CRS symbols at locations of a maximum of three columns.

In this embodiment of this application, the receiving unit 1501 receives a first request, where the first request is sent by a second base station based on a measurement report, and the measurement packet is used to obtain information about interference from a first cell to a second cell; and then, the sending unit 1503 sends first load information to the second base station based on the first request, where the first load information indicates a load degree of the first cell. In addition, the receiving unit 1501 further receives a second request, where the second request is sent by the second base station based on the information about interference and the first load information, and the processing unit 1502 switches the first cell to a CA secondary cell based on the second request and the first load information. In addition, when no CA secondary cell user is activated in the first cell, the sending unit 1503 sends, in a target resource block, CRS symbols at locations of a maximum of three columns, where the target resource block belongs to a system bandwidth, and a quantity of target resource blocks is less than a total quantity of resource blocks of the system bandwidth. The CRS symbols at the locations of a maximum of three columns are sent in the target resource block, so that time-domain muting and frequency-domain muting of a deep symbol are implemented. In this way, co-channel interference and CRS interference between cells are reduced, thereby improving experience of an edge user, and energy-saving duration and an energy-saving depth of the cell are increased, thereby reducing energy consumption of the entire wireless network and improving energy-saving gains and network experience.

In another possible design, the receiving unit 1501, the processing unit 1502, and the sending unit 1503 may perform, in a one-to-one correspondence manner, the methods/operations/steps/actions in the possible implementations of the first base station in the foregoing method embodiment.

In a possible design, the receiving unit 1501 is specifically configured to switch the first cell to the CA secondary cell based on the second request, the first load information, a third cell, and second load information, where the third cell is an inter-frequency co-coverage neighboring cell of the first cell, and the second load information indicates a load degree of the third cell.

In a possible design, before the first base station switches the first cell to the CA secondary cell based on the second request, the first load information, the third cell, and the second load information, the processing unit 1502 is further configured to determine the third cell based on an inter-frequency neighbor relationship and a co-coverage identifier, where the inter-frequency neighbor relationship indicates an inter-frequency neighboring cell of the first cell, and the co-coverage identifier indicates a cell whose coverage has an intersection with that of the third cell.

Alternatively, the processing unit 1502 is further configured to determine the third cell through inter-frequency measurement.

The receiving unit 1501 is further configured to receive the second load information sent by a third base station, where the third base station belongs to the third cell.

In a possible design, the sending unit 1503 is further configured to send a target message after the first cell is switched to the CA secondary cell, where the target message is used to notify that the first cell is currently the CA secondary cell.

In a possible design, the processing unit 1502 is further configured to forbid sending of a system message and paging.

For beneficial effects of the communication apparatus in the foregoing designs of this application, refer to the beneficial effects of the implementations in the method embodiment in FIG. 2 in one-to-one correspondence with the beneficial effects of the communication apparatus. Details are not described herein again.

It should be noted that content such as information exchange and an execution process between the modules/units in the communication apparatus in this embodiment corresponding to FIG. 15 is based on a same concept as the first base station in the method embodiment corresponding to FIG. 2 in this application. For specific content, refer to the descriptions in the method embodiment in this application. Details are not described herein again.

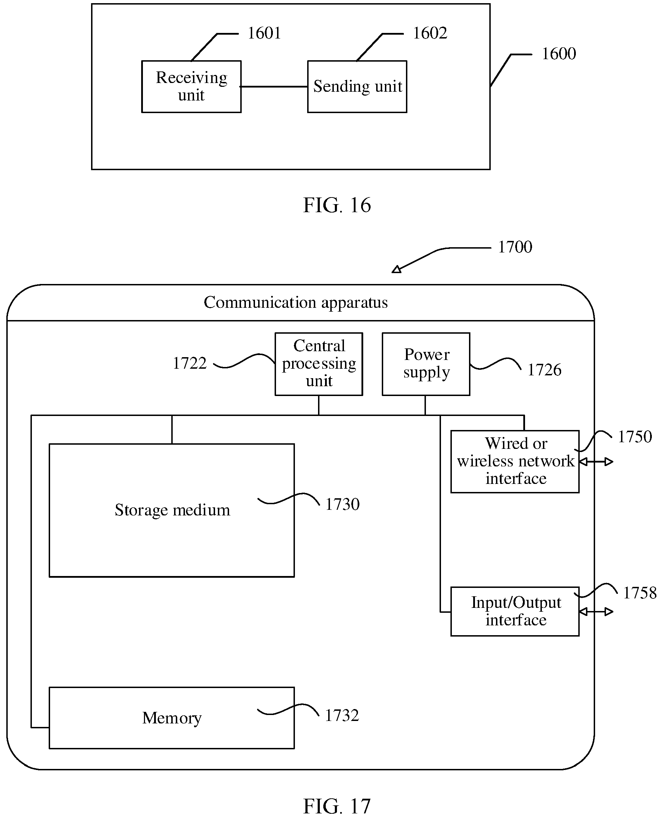

As shown in FIG. 16, an embodiment of this application further provides a base station. The base station is used in the Internet industry. Specifically, refer to FIG. 16. FIG. 16 is a diagram of another structure of a base station according to an embodiment of this application. In a possible implementation, the base station may include modules or units that perform and that is in one-to-one correspondence with the method/operations/steps/actions corresponding to the second base station in FIG. 2 in the foregoing method embodiment. The units may be hardware circuits, software, or may be implemented by a hardware circuit in combination with software. In a possible implementation, the base station 1600 may include a receiving unit 1601 and a sending unit 1602. The receiving unit 1601 may be configured to perform the step of receiving a measurement report sent by a user terminal and the step of receiving first load information in the foregoing method embodiment. The sending unit 1602 may be configured to perform the step of sending a first request and the step of sending a second request in the foregoing method embodiment.

In this embodiment of this application, the receiving unit 1601 receives a measurement report sent by a user terminal, where the measurement report is used to obtain information about interference from a first cell to a second cell, the second cell is a cell corresponding to a second base station, the first cell is a cell corresponding to a key-value, the first cell is an intra-frequency neighboring cell of the second cell, and the user terminal is connected to the second base station. Then, the sending unit 1602 sends a first request to the first base station based on the measurement report, where the first request indicates the first base station to determine first load information, and the first load information indicates a load degree of the first cell. Then, the receiving unit 1601 receives the first load information sent by the first base station, and the sending unit sends a second request to the first base station based on the information about interference and the first load information, where the second request indicates the first base station to switch the second cell to a CA secondary cell. After the first cell is switched to the CA secondary cell, time-domain muting and frequency-domain muting of a deep symbol may be implemented based on a state of a CA secondary cell user. In this way, co-channel interference and CRS interference between cells are reduced, thereby improving experience of an edge user, and energy-saving duration and an energy-saving depth of the cell are increased, thereby reducing energy consumption of the entire wireless network and improving energy-saving gains and network experience.

In another possible design, the receiving unit 1601 and the sending unit 1602 may perform, in a one-to-one correspondence manner, the methods/operations/steps/actions in the possible implementations of the second base station in the foregoing method embodiment.

In a possible design, the receiving unit 1601 is further configured to receive a target message sent by the first base station, where the target message is used to notify that the first cell is currently the CA secondary cell.

For beneficial effects of the base station in the foregoing designs of this application, refer to the beneficial effects of the implementations in the method embodiment in FIG. 2 in one-to-one correspondence with the beneficial effects of the base station. Details are not described herein again.

It should be noted that content such as information exchange and an execution process between the modules/units in the base station in this embodiment corresponding to FIG. 16 is based on a same concept as the second base station in the method embodiment corresponding to FIG. 2 in this application. For specific content, refer to the descriptions in the method embodiment in this application. Details are not described herein again.

In addition, functional modules or units in embodiments of this application may be integrated into one processor, each of the modules or units may exist alone physically, or at least two modules or units may be integrated into one module or unit. The integrated module or unit may be implemented in the form of hardware, or may be implemented in a form of a software functional module.

The following describes another communication apparatus provided in an embodiment of this application. Refer to FIG. 17. FIG. 17 is a diagram of a structure of a communication apparatus according to an embodiment of this application. The communication apparatus 1700 may be the base station in the embodiment corresponding to FIG. 15 or FIG. 16, and is configured to implement a function of the base station in FIG. 15 or FIG. 16. Specifically, the communication apparatus 1700 is implemented by one or more servers. The communication apparatus 1700 may have a large difference due to different configurations or different performance, and may include one or more central processing units (central processing units, CPU) 1722 (for example, one or more central processing units) and a memory 1732, and one or more storage media 1730 (for example, one or more storage devices). The memory 1732 and the storage medium 1730 may be transitory storage or persistent storage. A program stored in the storage medium 1730 may include one or more modules (not shown), and each module may include a series of instruction operations on the communication apparatus 1700. Further, the central processing unit 1722 may be configured to communicate with the storage medium 1730, and perform a series of instruction operations in the storage medium 1730 on the communication apparatus 1700.

The communication apparatus 1700 may further include one or more power supplies 1726, one or more wired or wireless network interfaces 1750, and/or one or more input/output interfaces 1758.

In this embodiment of this application, the central processing unit 1722 is configured to perform the method performed by the first base station in the embodiment corresponding to FIG. 2. For example, the central processing unit 1722 may be configured to: receive a first request, where the first request is sent by a second base station based on a measurement report, a first cell to which the communication apparatus 1700 belongs is an intra-frequency neighboring cell of a second cell to which the second base station belongs, the measurement report is used to obtain information about interference from the first cell to the second cell, and the information about interference indicates a degree of the interference from the first cell to the second cell; then, send first load information to the second base station based on the first request, where the first load information indicates a load degree of the first cell, and receive a second request, where the second request is sent by the second base station based on the information about interference and the first load information; then, switch the first cell to a CA secondary cell based on the second request and the first load information; and when no CA secondary cell user is activated in the first cell, send, in a target resource block, CRS symbols at locations of a maximum of three columns, where the target resource block belongs to a system bandwidth of the first base station, and a quantity of target resource blocks is less than a total quantity of resource blocks of the system bandwidth corresponding to the first base station. The CRS symbols at the locations of a maximum of three columns are sent in the target resource block, so that time-domain muting and frequency-domain muting of a deep symbol are implemented. In this way, co-channel interference and CRS interference between cells are reduced, thereby improving experience of an edge user, and energy-saving duration and an energy-saving depth of the cell are increased, thereby reducing energy consumption of the entire wireless network and improving energy-saving gains and network experience.

Alternatively, in this embodiment of this application, the central processing unit 1722 is configured to perform the method performed by the second base station in the embodiment corresponding to FIG. 2. For example, the central processing unit 1722 may be configured to: receive a measurement report sent by a user terminal, where the measurement report is used to obtain information about interference from a first cell to a second cell, the second cell is a cell corresponding to a second base station, the first cell is a cell corresponding to a first base station, the first cell is an intra-frequency neighboring cell of the second cell, and the user terminal is connected to the second base station; then, send a first request to the first base station based on the measurement report, where the first request indicates the first base station to determine first load information, and the first load information indicates a load degree of the first cell; and then, receive the first load information sent by the first base station. In addition, a sending unit sends a second request to the first base station based on the information about interference and the first load information, where the second request indicates the first base station to switch the second cell to a CA secondary cell. After the first cell is switched to the CA secondary cell, time-domain muting and frequency-domain muting of a deep symbol may be implemented based on a state of a CA secondary cell user. In this way, co-channel interference and CRS interference between cells are reduced, thereby improving experience of an edge user, and energy-saving duration and an energy-saving depth of the cell are increased, thereby reducing energy consumption of the entire wireless network and improving energy-saving gains and network experience.

An embodiment of this application further provides another communication apparatus, including a processor. The processor is coupled to a memory. The memory stores instructions. The processor is configured to execute the instructions, the communication apparatus is enabled to perform any one of the implementations described in the foregoing method embodiment.

An embodiment of this application further provides a computer-readable storage medium, including computer-readable instructions. When the computer-readable instructions are run on a computer, the computer is enabled to perform any one of the implementations described in the foregoing method embodiment.

An embodiment of this application further provides a computer program product. The computer program product includes a computer program or instructions. When the computer program or instructions are run on a computer, the computer is enabled to perform any one of the implementations described in the foregoing method embodiment.

This application further provides a chip or a chip system. The chip may include a processor. The chip may further include a memory (or a storage module) and/or a transceiver (or a communication module). Alternatively, the chip is coupled to a memory (or a storage module) and/or a transceiver (or a communication module). The transceiver (or the communication module) may be configured to support the chip in performing wired and/or wireless communication. The memory (or the storage module) may be configured to store a program or a set of instructions. The processor invokes the program or the set of instructions to implement operations performed by the terminal or the communication apparatus in any one of the foregoing method embodiment or the possible implementations of the method embodiment. The chip system may include the chip, or may include the chip and other discrete devices, such as a memory (or a storage module) and/or a transceiver (or a communication module).

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to the conventional technology may be implemented in a form of a software product. The computer software product is stored in a readable storage medium, for example, a floppy disk, a USB flash drive, a removable hard disk drive, a read only memory (read only memory, ROM), a random access memory (random access memory, RAM), a magnetic disk, or an optical disc in a computer, and includes several instructions for instructing a computer device (which may be a personal computer, a training device, a communication apparatus, or the like) to perform the method in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive (solid-state drive, SSD)), or the like.

## Claims

1. A method for reducing energy consumption of a wireless network, comprising:
receiving, by a first base station, a first request, wherein the first request is sent by a second base station based on a measurement report, a first cell to which the first base station belongs is an intra-frequency neighboring cell of a second cell to which the second base station belongs, the measurement report is used to obtain information about interference from the first cell to the second cell, and the information about interference indicates a degree of the interference from the first cell to the second cell;
sending, by the first base station, first load information to the second base station based on the first request, wherein the first load information indicates a load degree of the first cell;
receiving, by the first base station, a second request, wherein the second request is sent by the second base station based on the information about interference and the first load information;
switching, by the first base station, the first cell to a carrier aggregation CA secondary cell based on the second request and the first load information; and
when no CA secondary cell user is activated in the first cell, sending, by the first base station in a target resource block, cell-specific reference signal CRS symbols at locations of a maximum of three columns, wherein the target resource block belongs to a system bandwidth of the first base station, and a quantity of target resource blocks is less than a total quantity of resource blocks of the system bandwidth corresponding to the first base station.

2. The method according to claim 1, wherein switching, by the first base station, the first cell to the CA secondary cell based on the second request and the first load information comprises:
switching, by the first base station, the first cell to the CA secondary cell based on the second request, the first load information, a third cell, and second load information, wherein the third cell is an inter-frequency co-coverage neighboring cell of the first cell, and the second load information indicates a load degree of the third cell.

3. The method according to claim 2, wherein before switching, by the first base station, the first cell to the CA secondary cell based on the second request, the first load information, the third cell, and the second load information, the method further comprises:
determining, by the first base station, the third cell based on an inter-frequency neighbor relationship and a co-coverage identifier, wherein the inter-frequency neighbor relationship indicates an inter-frequency neighboring cell of the first cell, and the co-coverage identifier indicates a cell whose coverage has an intersection with that of the third cell;
or determining, by the first base station, the third cell through inter-frequency measurement; and
receiving, by the first base station, the second load information sent by a third base station, wherein the third base station belongs to the third cell.

4. The method according to any one of claims 1 to 3, wherein after switching the first cell to the CA secondary cell, the method further comprises:
sending, by the first base station, a target message, wherein the target message is used to notify that the first cell is currently the CA secondary cell; and/or
forbidding, by the first base station, sending of a system message and paging.

5. A method for reducing energy consumption of a wireless network, comprising:
receiving, by a second base station, a measurement report sent by a user terminal, wherein the measurement report is used to obtain information about interference from a first cell to a second cell, the second cell is a cell corresponding to the second base station, the first cell is a cell corresponding to the first base station, the first cell is an intra-frequency neighboring cell of the second cell, and the user terminal is connected to the second base station;
sending, by the second base station, a first request to the first base station based on the measurement report, wherein the first request indicates the first base station to determine first load information, and the first load information indicates a load degree of the first cell;
receiving, by the second base station, the first load information sent by the first base station; and
sending, by the second base station, a second request to the first base station based on the information about interference and the first load information, wherein the second request indicates the first base station to switch the second cell to a CA secondary cell.

6. The method according to claim 5, wherein after sending, by the second base station, the first request to the first base station based on the information about interference and the first load information, the method further comprises:
receiving, by the second base station, a target message sent by the first base station, wherein the target message is used to notify that the first cell is currently the CA secondary cell.

7. A base station, wherein the base station comprises:
a receiving unit, configured to receive a first request, wherein the first request is sent by a second base station based on a measurement report, a first cell to which the first base station belongs is an intra-frequency neighboring cell of a second cell to which the second base station belongs, the measurement report is used to obtain information about interference from the first cell to the second cell, and the information about interference indicates a degree of the interference from the first cell to the second cell;
a sending unit, configured to send first load information to the second base station based on the first request, wherein the first load information indicates a load degree of the first cell, wherein
the receiving unit is further configured to receive a second request, wherein the second request is sent by the second base station based on the information about interference and the first load information;
a processing unit, configured to switch the first cell to a carrier aggregation CA secondary cell based on the second request and the first load information; and
a sending unit, configured to: when no CA secondary cell user is activated in the first cell, send, in a target resource block, cell-specific reference signal CRS symbols at locations of a maximum of three columns, wherein the target resource block belongs to a system bandwidth of the first base station, and a quantity of target resource blocks is less than a total quantity of resource blocks of the system bandwidth corresponding to the first base station.

8. The base station according to claim 7, wherein the processing unit is specifically configured to switch the first cell to the CA secondary cell based on the second request, the first load information, a third cell, and second load information, wherein the third cell is an inter-frequency co-coverage neighboring cell of the first cell, and the second load information indicates a load degree of the third cell.

9. The base station according to claim 8, wherein the processing unit is further configured to determine the third cell based on an inter-frequency neighbor relationship and a co-coverage identifier, wherein the inter-frequency neighbor relationship indicates an inter-frequency neighboring cell of the first cell, and the co-coverage identifier indicates a cell whose coverage has an intersection with that of the third cell;
or the processing unit is further configured to determine the third cell through inter-frequency measurement; and
the receiving unit is further configured to receive the second load information sent by a third base station, wherein the third base station belongs to the third cell.

10. The base station according to any one of claims 7 to 9, wherein after switching the first cell to the CA secondary cell,
the sending unit is further configured to send a target message, wherein the target message is used to notify that the first cell is currently the CA secondary cell; and/or
the processing unit is further configured to forbid sending of a system message and paging.

11. A base station, wherein the base station comprises:
a receiving unit, configured to receive a measurement report sent by a user terminal, wherein the measurement report is used to obtain information about interference from a first cell to a second cell, the second cell is a cell corresponding to the second base station, the first cell is a cell corresponding to the first base station, the first cell is an intra-frequency neighboring cell of the second cell, and the user terminal is connected to the second base station; and
a sending unit, configured to send a first request to the first base station based on the measurement report, wherein the first request indicates the first base station to determine first load information, and the first load information indicates a load degree of the first cell, wherein
the receiving unit is further configured to receive the first load information sent by the first base station; and
the sending unit is further configured to send a second request to the first base station based on the information about interference and the first load information, wherein the second request indicates the first base station to switch the second cell to a CA secondary cell,
wherein, more particularly, after the sending the first request to the first base station based on the information about interference and the first load information, the receiving unit is further configured to receive a target message sent by the first base station, wherein the target message is used to notify that the first cell is currently the CA secondary cell.

12. A communication apparatus, comprising a processor, wherein the processor is coupled to a memory, the memory stores instructions, and the processor is configured to execute the instructions, to enable the communication apparatus to perform the method according to any one of claims 1 to 6.

13. A computer-readable storage medium, comprising computer-readable instructions, wherein when the computer-readable instructions are run on a computer, the method according to any one of claims 1 to 6 is performed.

14. A computer program product, comprising computer-readable instructions, wherein when the computer-readable instructions are run on a computer, the method according to any one of claims 1 to 6 is performed.

15. A communication system, comprising a first base station and a second base station, wherein the first base station is configured to perform the method according to any one of claims 1 to 4, and the second base station is configured to perform the method according to claim 5 or 6.

## Patentansprüche

1. Verfahren zum Reduzieren des Stromverbrauchs eines drahtlosen Netzwerks, umfassend:
Empfangen, durch eine erste Basisstation, einer ersten Anfrage, wobei die erste Anfrage durch eine zweite Basisstation basierend auf einem Messbericht gesendet wird, eine erste Zelle, zu der die erste Basisstation gehört, eine Intrafrequenz-Nachbarzelle einer zweiten Zelle ist, zu der die zweite Basisstation gehört, der Messbericht verwendet wird, um Informationen über Interferenzen von der ersten Zelle an die zweite Zelle zu erhalten, und die Informationen über Interferenzen einen Grad der Interferenz von der ersten Zelle an die zweite Zelle angeben;
Senden, durch die erste Basisstation, von ersten Lastinformationen an die zweite Basisstation basierend auf der ersten Anfrage, wobei die ersten Lastinformationen einen Auslastungsgrad der ersten Zelle angeben;
Empfangen, durch die erste Basisstation, einer zweiten Anfrage, wobei die zweite Anfrage durch die zweite Basisstation basierend auf den Informationen über Interferenzen und den ersten Lastinformationen gesendet wird;
Umschalten, durch die erste Basisstation, der ersten Zelle auf eine sekundäre Zelle mit Carrier Aggregation, sekundäre CA-Zelle, basierend auf der zweiten Anfrage und den ersten Lastinformationen; und
wenn in der ersten Zelle kein Nutzer einer sekundären CA-Zelle aktiviert ist, Senden, durch die erste Basisstation in einem Zielressourcenblock, von zellenspezifischen Referenzsignal-Symbolen, CRS-Symbolen, an Orten von maximal drei Spalten, wobei der Zielressourcenblock zu einer Systembandbreite der ersten Basisstation gehört und eine Anzahl von Zielressourcenblöcken kleiner ist als eine Gesamtanzahl von Ressourcenblöcken der Systembandbreite, die der ersten Basisstation entspricht.

2. Verfahren nach Anspruch 1, wobei das Umschalten, durch die erste Basisstation, der ersten Zelle auf die sekundäre CA-Zelle basierend auf der zweiten Anfrage und den ersten Lastinformationen Folgendes umfasst:
Umschalten, durch die erste Basisstation, der ersten Zelle auf die sekundäre CA-Zelle basierend auf der zweiten Anfrage, den ersten Lastinformationen, einer dritten Zelle und zweiten Lastinformationen, wobei die dritte Zelle eine Nachbarzelle der ersten Zelle mit gemeinsamer Interfrequenz-Abdeckung ist und die zweiten Lastinformationen einen Auslastungsgrad der dritten Zelle angeben.

3. Verfahren nach Anspruch 2, wobei das Verfahren vor dem Umschalten, durch die erste Basisstation, der ersten Zelle auf die sekundäre CA-Zelle basierend auf der zweiten Anfrage, den ersten Lastinformationen, der dritten Zelle und den zweiten Lastinformationen ferner Folgendes umfasst:
Bestimmen, durch die erste Basisstation, der dritten Zelle basierend auf einer Interfrequenz-Nachbarbeziehung und einer Kennung einer gemeinsamen Abdeckung, wobei die Interfrequenz-Nachbarbeziehung eine Interfrequenz-Nachbarzelle der ersten Zelle angibt und die Kennung einer gemeinsamen Abdeckung eine Zelle angibt, deren Abdeckung sich mit der der dritten Zelle überschneidet;
oder Bestimmen, durch die erste Basisstation, der dritten Zelle durch Interfrequenzmessung; und
Empfangen, durch die erste Basisstation, der zweiten Lastinformationen, die durch eine dritte Basisstation gesendet werden, wobei die dritte Basisstation zu der dritten Zelle gehört.

4. Verfahren nach einem der Ansprüche 1 bis 3, wobei das Verfahren nach dem Umschalten der ersten Zelle auf die sekundäre CA-Zelle ferner Folgendes umfasst:
Senden, durch die erste Basisstation, einer Zielnachricht, wobei die Zielnachricht dazu verwendet wird, mitzuteilen, dass die erste Zelle aktuell die sekundäre CA-Zelle ist; und/oder Verbieten, durch die erste Basisstation, des Sendens einer Systemnachricht und des Pagings.

5. Verfahren zum Reduzieren des Stromverbrauchs eines drahtlosen Netzwerks, umfassend:
Empfangen, durch eine zweite Basisstation, eines Messberichts, der durch ein Benutzerterminal gesendet wird, wobei der Messbericht dazu verwendet wird, Informationen über Interferenzen von einer ersten Zelle an eine zweite Zelle zu erhalten, die zweite Zelle eine Zelle ist, die der zweiten Basisstation entspricht, die erste Zelle eine Zelle ist, die der ersten Basisstation entspricht, die erste Zelle eine Intrafrequenz-Nachbarzelle der zweiten Zelle ist und das Benutzerterminal mit der zweiten Basisstation verbunden ist;
Senden, durch die zweite Basisstation, einer ersten Anfrage an die erste Basisstation basierend auf dem Messbericht, wobei die erste Anfrage die erste Basisstation angibt, um erste Lastinformationen zu bestimmen, und die ersten Lastinformationen einen Auslastungsgrad der ersten Zelle angeben;
Empfangen, durch die zweite Basisstation, der ersten Lastinformationen, die durch die erste Basisstation gesendet werden; und
Senden, durch die zweite Basisstation, einer zweiten Anfrage an die erste Basisstation basierend auf den Informationen über Interferenzen und den ersten Lastinformationen, wobei die zweite Anfrage die erste Basisstation angibt, um die zweite Zelle auf eine sekundäre CA-Zelle umzuschalten.

6. Verfahren nach Anspruch 5, wobei das Verfahren nach dem Senden, durch die zweite Basisstation, der ersten Anfrage an die erste Basisstation basierend auf den Informationen über Interferenzen und den ersten Lastinformationen ferner Folgendes umfasst:
Empfangen, durch die zweite Basisstation, einer Zielnachricht, die durch die erste Basisstation gesendet wird, wobei die Zielnachricht dazu verwendet wird, mitzuteilen, dass die erste Zelle aktuell die sekundäre CA-Zelle ist.

7. Basisstation, wobei die Basisstation Folgendes umfasst:
eine Empfangseinheit, die dazu konfiguriert ist, eine erste Anfrage zu empfangen, wobei die erste Anfrage durch eine zweite Basisstation basierend auf einem Messbericht gesendet wird, eine erste Zelle, zu der die erste Basisstation gehört, eine Intrafrequenz-Nachbarzelle einer zweiten Zelle ist, zu der die zweite Basisstation gehört, der Messbericht dazu verwendet wird, Informationen über Interferenzen von der ersten Zelle an die zweite Zelle zu erhalten, und die Informationen über Interferenzen einen Grad der Interferenz von der ersten Zelle an die zweite Zelle angeben;
eine Sendeeinheit, die dazu konfiguriert ist, basierend auf der ersten Anfrage erste Lastinformationen an die zweite Basisstation zu senden, wobei die ersten Lastinformationen einen Auslastungsgrad der ersten Zelle angeben, wobei
die Empfangseinheit ferner dazu konfiguriert ist, eine zweite Anfrage zu empfangen, wobei die zweite Anfrage durch die zweite Basisstation basierend auf den Informationen über Interferenzen und den ersten Lastinformationen gesendet wird;
eine Verarbeitungseinheit, die dazu konfiguriert ist, die erste Zelle basierend auf der zweiten Anfrage und den ersten Lastinformationen auf eine sekundäre Zelle mit Carrier Aggregation, sekundäre CA-Zelle, umzuschalten; und
eine Sendeeinheit, die zu Folgendem konfiguriert ist: wenn in der ersten Zelle kein Nutzer einer sekundären CA-Zelle aktiviert ist, Senden, in einem Zielressourcenblock, von zellenspezifischen Referenzsignal-Symbolen, CRS-Symbolen, an Orten von maximal drei Spalten, wobei der Zielressourcenblock zu einer Systembandbreite der ersten Basisstation gehört und eine Anzahl von Zielressourcenblöcken kleiner ist als eine Gesamtanzahl von Ressourcenblöcken der Systembandbreite, die der ersten Basisstation entspricht.

8. Basisstation nach Anspruch 7, wobei die Verarbeitungseinheit speziell dazu konfiguriert ist, die erste Zelle basierend auf der zweiten Anfrage, den ersten Lastinformationen, einer dritten Zelle und zweiten Lastinformationen auf die sekundäre CA-Zelle umzuschalten, wobei die dritte Zelle eine Nachbarzelle der ersten Zelle mit gemeinsamer Interfrequenz-Abdeckung ist und die zweiten Lastinformationen einen Auslastungsgrad der dritten Zelle angeben.

9. Basisstation nach Anspruch 8, wobei die Verarbeitungseinheit ferner dazu konfiguriert ist, die dritte Zelle basierend auf einer Interfrequenz-Nachbarbeziehung und einer Kennung einer gemeinsamen Abdeckung zu bestimmen, wobei die Interfrequenz-Nachbarbeziehung eine Interfrequenz-Nachbarzelle der ersten Zelle angibt und die Kennung einer gemeinsamen Abdeckung eine Zelle angibt, deren Abdeckung sich mit der der dritten Zelle überschneidet;
oder die Verarbeitungseinheit ferner dazu konfiguriert ist, die dritte Zelle durch Interfrequenzmessung zu bestimmen; und
die Empfangseinheit ferner dazu konfiguriert ist, die zweiten Lastinformationen zu empfangen, die durch eine dritte Basisstation gesendet werden, wobei die dritte Basisstation zu der dritten Zelle gehört.

10. Basisstation nach einem der Ansprüche 7 bis 9, wobei die Sendeeinheit nach dem Umschalten der ersten Zelle auf die sekundäre CA-Zelle ferner dazu konfiguriert ist,
eine Zielnachricht zu senden, wobei die Zielnachricht dazu verwendet wird, mitzuteilen, dass die erste Zelle aktuell die sekundäre CA-Zelle ist; und/oder
die Verarbeitungseinheit ferner dazu konfiguriert ist, das Senden einer Systemnachricht und Paging zu verbieten.

11. Basisstation, wobei die Basisstation Folgendes umfasst:
eine Empfangseinheit, die dazu konfiguriert ist, einen Messbericht zu empfangen, der durch ein Benutzerterminal gesendet wird, wobei der Messbericht dazu verwendet wird, Informationen über Interferenzen von einer ersten Zelle an eine zweite Zelle zu erhalten, die zweite Zelle eine Zelle ist, die der zweiten Basisstation entspricht, die erste Zelle eine Zelle ist, die der ersten Basisstation entspricht, die erste Zelle eine Intrafrequenz-Nachbarzelle der zweiten Zelle ist und das Benutzerterminal mit der zweiten Basisstation verbunden ist; und
eine Sendeeinheit, die dazu konfiguriert ist, eine erste Anfrage an die erste Basisstation basierend auf dem Messbericht zu senden, wobei die erste Anfrage die erste Basisstation angibt, um erste Lastinformationen zu bestimmen, und die ersten Lastinformationen einen Auslastungsgrad der ersten Zelle angeben, wobei
die Empfangseinheit ferner dazu konfiguriert ist, die ersten Lastinformationen zu empfangen, die durch die erste Basisstation gesendet werden; und
die Sendeeinheit ferner dazu konfiguriert ist, eine zweite Anfrage basierend auf den Informationen über Interferenzen und den ersten Lastinformationen an die erste Basisstation zu senden, wobei die zweite Anfrage die erste Basisstation angibt, um die zweite Zelle auf eine sekundäre CA-Zelle umzuschalten,
wobei die Empfangseinheit, konkreter nach dem Senden der ersten Anfrage an die erste Basisstation basierend auf den Informationen über Interferenzen und den ersten Lastinformationen, ferner dazu konfiguriert ist, eine Zielnachricht zu empfangen, die durch die erste Basisstation gesendet wird, wobei die Zielnachricht dazu verwendet wird, mitzuteilen, dass die erste Zelle aktuell die sekundäre CA-Zelle ist.

12. Kommunikationseinrichtung, umfassend einen Prozessor, wobei der Prozessor mit einem Speicher gekoppelt ist, der Speicher Anweisungen speichert und der Prozessor dazu konfiguriert ist, die Anweisungen dazu auszuführen, die Kommunikationseinrichtung dazu in die Lage zu versetzen, das Verfahren nach einem der Ansprüche 1 bis 6 durchzuführen.

13. Computerlesbares Speichermedium, umfassend computerlesbare Anweisungen, wobei, wenn die computerlesbaren Anweisungen auf einem Computer umgesetzt werden, das Verfahren nach einem der Ansprüche 1 bis 6 durchgeführt wird.

14. Computerprogrammprodukt, umfassend computerlesbare Anweisungen, wobei, wenn die computerlesbaren Anweisungen auf einem Computer umgesetzt werden, das Verfahren nach einem der Ansprüche 1 bis 6 durchgeführt wird.

15. Kommunikationssystem, umfassend eine erste Basisstation und eine zweite Basisstation, wobei die erste Basisstation dazu konfiguriert ist, das Verfahren nach einem der Ansprüche 1 bis 4 durchzuführen, und die zweite Basisstation dazu konfiguriert ist, das Verfahren nach Anspruch 5 oder 6 durchzuführen.

## Revendications

1. Procédé de réduction de la consommation d'énergie d'un réseau sans fil, comprenant :
la réception, par une première station de base, d'une première requête, dans lequel la première requête est envoyée par une deuxième station de base sur la base d'un rapport de mesure, une première cellule à laquelle appartient la première station de base est une cellule voisine intra-fréquence d'une deuxième cellule à laquelle appartient la deuxième station de base, le rapport de mesure est utilisé pour obtenir des informations concernant l'interférence de la première cellule à la deuxième cellule, et les informations concernant l'interférence indiquent un degré de l'interférence de la première cellule à la deuxième cellule ;
l'envoi, par la première station de base, de premières informations de charge à la deuxième station de base sur la base de la première requête, dans lequel les premières informations de charge indiquent un degré de charge de la première cellule ;
la réception, par la première station de base, d'une seconde requête, dans lequel la seconde requête est envoyée par la deuxième station de base sur la base des informations concernant l'interférence et des premières informations de charge ;
la commutation, par la première station de base, de la première cellule vers une cellule secondaire d'agrégation de porteuses, CA, sur la base de la seconde requête et des premières informations de charge ; et
lorsqu'aucun utilisateur de cellule secondaire CA n'est activé dans la première cellule, l'envoi, par la première station de base dans un bloc de ressources cible, de symboles de signal de référence spécifique à la cellule, CRS, à des emplacements d'un maximum de trois colonnes, dans lequel le bloc de ressources cible appartient à une bande passante système de la première station de base, et une quantité de blocs de ressources cibles est inférieure à une quantité totale de blocs de ressources de la bande passante système correspondant à la première station de base.

2. Procédé selon la revendication 1, dans lequel la commutation, par la première station de base, de la première cellule vers la cellule secondaire CA sur la base de la seconde requête et des premières informations de charge comprend :
la commutation, par la première station de base, de la première cellule vers la cellule secondaire CA sur la base de la seconde requête, des premières informations de charge, d'une troisième cellule et de secondes informations de charge, dans lequel la troisième cellule est une cellule voisine de co-couverture inter-fréquence de la première cellule, et les secondes informations de charge indiquent un degré de charge de la troisième cellule.

3. Procédé selon la revendication 2, dans lequel, avant la commutation, par la première station de base, de la première cellule vers la cellule secondaire CA sur la base de la seconde requête, des premières informations de charge, de la troisième cellule et des secondes informations de charge, le procédé comprend en outre :
la détermination, par la première station de base, de la troisième cellule sur la base d'une relation de voisinage inter-fréquence et d'un identifiant de co-couverture, dans lequel la relation de voisinage inter-fréquence indique une cellule voisine inter-fréquence de la première cellule, et l'identifiant de co-couverture indique une cellule dont la couverture a une intersection avec celle de la troisième cellule ;
ou la détermination, par la première station de base, de la troisième cellule à travers une mesure inter-fréquence ; et
la réception, par la première station de base, des secondes informations de charge envoyées par une troisième station de base, dans lequel la troisième station de base appartient à la troisième cellule.

4. Procédé selon l'une quelconque des revendications 1 à 3, dans lequel, après la commutation de la première cellule vers la cellule secondaire CA, le procédé comprend en outre :
l'envoi, par la première station de base, d'un message cible, dans lequel le message cible est utilisé pour notifier que la première cellule est actuellement la cellule secondaire CA ; et/ou l'interdiction, par la première station de base, de l'envoi d'un message système et de la radiomessagerie.

5. Procédé de réduction de la consommation d'énergie d'un réseau sans fil, comprenant :
la réception, par une deuxième station de base, d'un rapport de mesure envoyé par un terminal utilisateur, dans lequel le rapport de mesure est utilisé pour obtenir des informations concernant l'interférence d'une première cellule à une deuxième cellule, la deuxième cellule est une cellule correspondant à la deuxième station de base, la première cellule est une cellule correspondant à la première station de base, la première cellule est une cellule voisine intra-fréquence de la deuxième cellule, et le terminal utilisateur est relié à la deuxième station de base ;
l'envoi, par la deuxième station de base, d'une première requête à la première station de base sur la base du rapport de mesure, dans lequel la première requête indique à la première station de base de déterminer des premières informations de charge, et les premières informations de charge indiquent un degré de charge de la première cellule ;
la réception, par la deuxième station de base, des premières informations de charge envoyées par la première station de base ; et
l'envoi, par la deuxième station de base, d'une seconde requête à la première station de base sur la base des informations concernant l'interférence et des premières informations de charge, dans lequel la seconde requête indique à la première station de base de commuter la deuxième cellule vers une cellule secondaire CA.

6. Procédé selon la revendication 5, dans lequel, après l'envoi, par la deuxième station de base, de la première requête à la première station de base sur la base des informations concernant l'interférence et des premières informations de charge, le procédé comprend en outre :
la réception, par la deuxième station de base, d'un message cible envoyé par la première station de base, dans lequel le message cible est utilisé pour notifier que la première cellule est actuellement la cellule secondaire CA.

7. Station de base, dans laquelle la station de base comprend :
une unité de réception, configurée pour recevoir une première requête, dans laquelle la première requête est envoyée par une deuxième station de base sur la base d'un rapport de mesure, une première cellule à laquelle appartient la première station de base est une cellule voisine intra-fréquence d'une deuxième cellule à laquelle appartient la deuxième station de base, le rapport de mesure est utilisé pour obtenir des informations concernant l'interférence de la première cellule à la deuxième cellule, et les informations concernant l'interférence indiquent un degré de l'interférence de la première cellule à la deuxième cellule ;
une unité d'envoi, configurée pour envoyer des premières informations de charge à la deuxième station de base sur la base de la première requête, dans laquelle les premières informations de charge indiquent un degré de charge de la première cellule, dans lequel
une unité de réception est en outre configurée pour recevoir une seconde requête, dans laquelle la seconde requête est envoyée par la deuxième station de base sur la base des informations concernant l'interférence et des premières informations de charge ;
une unité de traitement, configurée pour commuter la première cellule vers une cellule secondaire d'agrégation de porteuses, CA, sur la base de la seconde requête et des premières informations de charge ; et
une unité d'envoi, configurée pour : lorsqu'aucun utilisateur de cellule secondaire CA n'est activé dans la première cellule, envoyer, dans un bloc de ressources cible, des symboles de signal de référence spécifique à la cellule, CRS, à des emplacements d'un maximum de trois colonnes, dans laquelle le bloc de ressources cible appartient à une bande passante système de la première station de base, et une quantité de blocs de ressources cibles est inférieure à une quantité totale de blocs de ressources de la bande passante système correspondant à la première station de base.

8. Station de base selon la revendication 7, dans lequel l'unité de traitement est spécifiquement configurée pour commuter la première cellule vers la cellule secondaire CA sur la base de la seconde requête, des premières informations de charge, d'une troisième cellule et de secondes informations de charge, dans laquelle la troisième cellule est une cellule voisine de co-couverture inter-fréquence de la première cellule, et les secondes informations de charge indiquent un degré de charge de la troisième cellule.

9. Station de base selon la revendication 8, dans laquelle l'unité de traitement est en outre configurée pour déterminer la troisième cellule sur la base d'une relation de voisinage inter-fréquence et d'un identifiant de co-couverture, dans laquelle la relation de voisinage inter-fréquence indique une cellule voisine inter-fréquence de la première cellule, et l'identifiant de co-couverture indique une cellule dont la couverture a une intersection avec celle de la troisième cellule ;
ou l'unité de traitement est en outre configurée en outre pour déterminer la troisième cellule à travers une mesure inter-fréquence ; et
l'unité de réception est en outre configurée pour recevoir les secondes informations de charge envoyées par une troisième station de base, dans lequel la troisième station de base appartient à la troisième cellule.

10. Station de base selon l'une quelconque des revendications 7 à 9, dans lequel, après la commutation de la première cellule vers la cellule secondaire CA,
l'unité d'envoi est en outre configurée pour envoyer un message cible, dans lequel le message cible est utilisé pour notifier que la première cellule est actuellement la cellule secondaire CA ; et/ou
l'unité de traitement est en outre configurée pour interdire l'envoi d'un message système et la radiomessagerie.

11. Station de base, dans lequel la station de base comprend :
une unité de réception, configurée pour recevoir un rapport de mesure envoyé par un terminal utilisateur, dans lequel le rapport de mesure est utilisé pour obtenir des informations concernant l'interférence d'une première cellule à une deuxième cellule, la deuxième cellule est une cellule correspondant à la deuxième station de base, la première cellule est une cellule correspondant à la première station de base, la première cellule est une cellule voisine intra-fréquence de la deuxième cellule, et le terminal utilisateur est relié à la deuxième station de base ; et
une unité d'envoi, configurée pour envoyer une première requête à la première station de base sur la base du rapport de mesure, dans lequel la première requête indique à la première station de base de déterminer des premières informations de charge, et les premières informations de charge indiquent un degré de charge de la première cellule, dans lequel
l'unité de réception est en outre configurée pour recevoir les premières informations de charge envoyées par la première station de base ; et
l'unité d'envoi est en outre configurée pour envoyer une seconde requête à la première station de base sur la base des informations concernant l'interférence et des premières informations de charge, dans lequel la seconde requête indique à la première station de base de commuter la deuxième cellule vers une cellule secondaire CA,
dans lequel, plus particulièrement, après l'envoi de la première requête à la première station de base sur la base des informations concernant l'interférence et des premières informations de charge, l'unité de réception est en outre configurée pour recevoir un message cible envoyé par la première station de base, dans laquelle le message cible est utilisé pour notifier que la première cellule est actuellement la cellule secondaire CA.

12. Appareil de communication, comprenant un processeur, dans lequel le processeur est couplé à une mémoire, la mémoire stocke des instructions, et le processeur est configuré pour exécuter les instructions afin de permettre à l'appareil de communication de réaliser le procédé selon l'une quelconque des revendications 1 à 6.

13. Support de stockage lisible par ordinateur, comprenant des instructions lisibles par ordinateur, dans lequel, lorsque les instructions lisibles par ordinateur sont exécutées sur un ordinateur, le procédé selon l'une quelconque des revendications 1 à 6 est réalisé.

14. Produit de programme informatique, comprenant des instructions lisibles par ordinateur, dans lequel, lorsque les instructions lisibles par ordinateur sont exécutées sur un ordinateur, le procédé selon l'une quelconque des revendications 1 à 6 est réalisé.

15. Système de communication, comprenant une première station de base et une deuxième station de base, dans lequel la première station de base est configurée pour réaliser le procédé selon l'une quelconque des revendications 1 à 4, et la deuxième station de base est configurée pour réaliser le procédé selon la revendication 5 ou 6.
